# EUROPEAN PATENT APPLICATION

(11) **EP 2 290 496 A1**
(43) Date of publication of application: **02.03.2011**
(21) Application number: 09305800.6
(22) Date of filing: 28.08.2009
(51) Int. Cl.: G06F 1/26

(54) **Method of and apparatus for powering an electronic device**

(71) Applicant: ST-Ericsson (France) SAS, 38000 Grenoble (FR); ST-Ericsson SA, 1228 Plan-les-Ouates (CH); St Ericsson Inc., Carrolton, TX 75006 (US)
(72) Inventor: Cimaz, Lionel, 35137 Pleumeleuc (FR); Kallam, Praveen, Austin TX 78735 (US)
(74) Representative: Verdure, Stéphane

(57) **Abstract**

A method of and device for powering an electronic device (100) , the electronic device being operable to have an internal power supply (101) and being connectable to an external power supply (104). The method includes: detecting the connection of the electronic device(100) to an external power supply (104) for powering the electronic device (100) ; determining if an operational internal power (101) supply is present in the electronic device; and if it is determined that an operational autonomous internal power supply (101) is present, the method further includes maintaining a high impedance electrical path between the internal power supply (101) and the external power supply (104) ; and powering the device by means of the internal power supply (101).

## Description

### Field of the Invention

The present invention relates in general to a method and an apparatus for powering an electronic device. More particularly, but not exclusively, the invention relates to a method and an apparatus for powering an electronic device via a USB connection.

### Background of the Invention

In the manufacture of mobile devices such as a mobile telephone it is often convenient at the end of the manufacture of the device or when debugging the device to be able to power it without inserting any battery and by using the standard battery charger connection. Such a powering mode is sometime referred to as a « testing supply mode ».

Some systems in particular use a charger connection such as the USB standard connection of the device to get an external power supply line. From the USB connection, a specific signalling informs the PMU (power management unit) of the device product to get its power supply via the USB connection instead of from the internal battery of the device.

In such a situation, battery charging transistors of the device battery, which are used in normal operation to draw a regulated current from the charger connection to the battery, are forced to the ON state to form a closed switch. Such a configuration results in a low impedance connection between the charger connection and the battery voltage line. The device can thus operate, sourcing its power supply directly from an external power supply by means of the charger connection.

Due to the low impedance connection between the battery line and the external power supply through charging plug, however, a high current can flow to the battery if the battery is inserted by error and if the voltage of the external power supply is greater than that of the maximum voltage of the battery. Moreover, the low impedance can also result in an over voltage being applied to battery if inserted by error. The end result may be a simple battery damage or in more extreme cases can even result in an explosion of the battery.

One approach to avoid such drawbacks is to warn users that the battery should be disconnected from the device before using such a power supply mode.

Another approach involves implementing a current/voltage limiting mechanism within the device or in the external power supply. However, such a current/voltage limitation mechanism can lead to a non-full operability of the device when in such a specific power supply mode. A limitation compliant with safe battery charging may not allow sufficient current to be supplied from the external power supply for the operation of all the features of the device (a mobile phone, for example, can draw up to 2 Ampere current peaks while a safe current limitation would be 400mA).

### Summary of the Invention

In view of the foregoing, a first aspect of the invention provides a method of powering an electronic device, the electronic device being operable to have an internal power supply and being connectable to an external power supply, the method comprising: detecting the connection of the electronic device to the external power supply; determining if an operational internal power supply is present in the electronic device; and upon determining that an operational internal power supply is present, the method further comprising maintaining a high impedance electrical path between a power line of the internal power supply and the external power supply; and powering the device by means of the internal power supply.

A second aspect of the invention provides a mobile electronic device comprising
an internal power supply line; a connector operable to connect the electronic device to an external power supply, a switch arrangement operable in a first state to provide a high impedance electrical path between the internal power supply line and the external power supply and in a second state to provide a low impedance electrical path between the internal power supply line and the external power supply; a processor operable to determine if the electronic device is connected to the external power supply; and to determine if an operational internal power supply is present in the electronic device; the processor being operable to maintain the switch arrangement in the first state if it is determined that an operational internal power supply is present, such that the electronic device can be powered by the internal power supply.

The methods according to the invention may be computer implemented. The methods may be implemented in software on a programmable apparatus. They may also be implemented solely in hardware or in software, or in a combination thereof.

Since at least parts of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a block diagram of a device to be powered according to an embodiment of the method;
Figure 2 is a flow chart of a method of powering an electronic device according to the embodiment of the invention; and
Figure 3 is a flow chart of steps of a method of powering an electronic device according to the embodiment of the invention.

### Detailed description

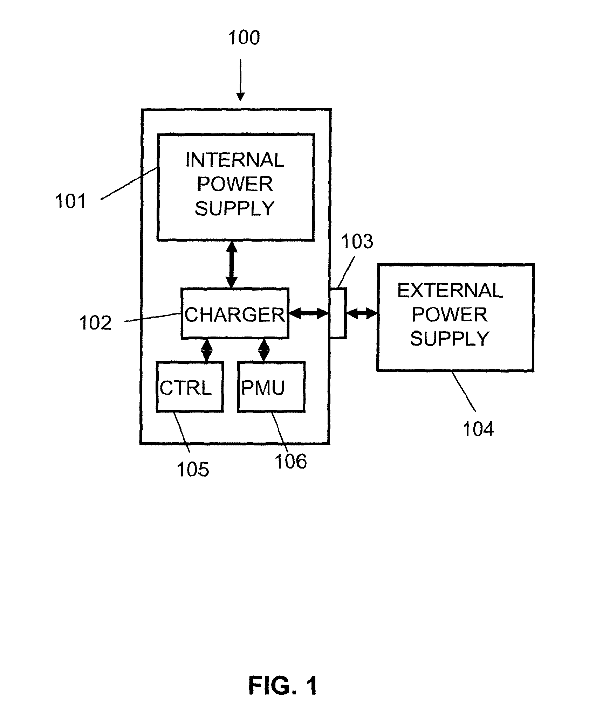

A method of an apparatus for powering an electronic device, according to an embodiment of the invention will be described with reference to Figures 1 to 3.

Figure 1 is a schematic block diagram of an apparatus for powering an electronic device according to the embodiment of the invention. The electronic device may be a wireless communication device such as a mobile telephone based on GSM, GPRS or EDGE chip technology, for example, but it will be appreciated that the method of the invention is not limited thereto and may be applied in any mobile electronic device which can be powered by an internal power supply and by means of an external power supply.

The electronic device 100 includes a battery 101 as an internal power supply and a connector 103 for connecting the electronic device 100 to an external power supply 104. The connector may be a standard battery charging connection of the electronic device 100 or a USB connection. It will be appreciated that some embodiments of the electronic device 100 will include both a USB connector and a battery charging connection while some devices may include one or the other. It will be appreciated that the USB connector may be a micro USB connector or a standard size USB connector.

The electronic device 100 includes a battery charger cell 102 on a current path between the battery 101 and the external power supply 104. The battery charger cell includes an arrangement of battery charger transistors. When the transistors of the battery charger cell 102 are placed in an ON state a low impedance connection is provided between the external power supply and the voltage line of the battery 101 so that functional modules of the electronic device connected to the battery 101 can be powered by the external power supply 104.

The electronic device further includes a controller 105 for controlling the charging transistor arrangement of battery charger cell 102 and being operable to place the transistors of the charging transistor arrangement of battery charger cell 102 in an ON state or an OFF state. A power management unit PMU 106 is also provided for managing power functions within the electronic device. Such a module is well known in the field and requires no further details for an understanding its operation.

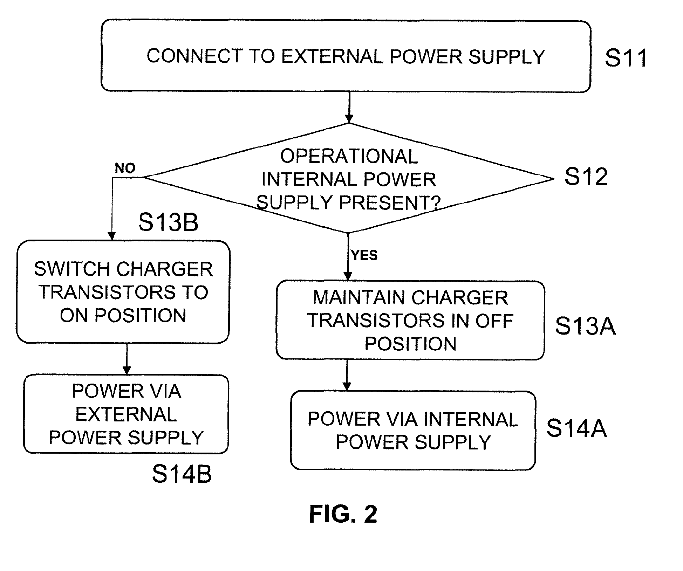

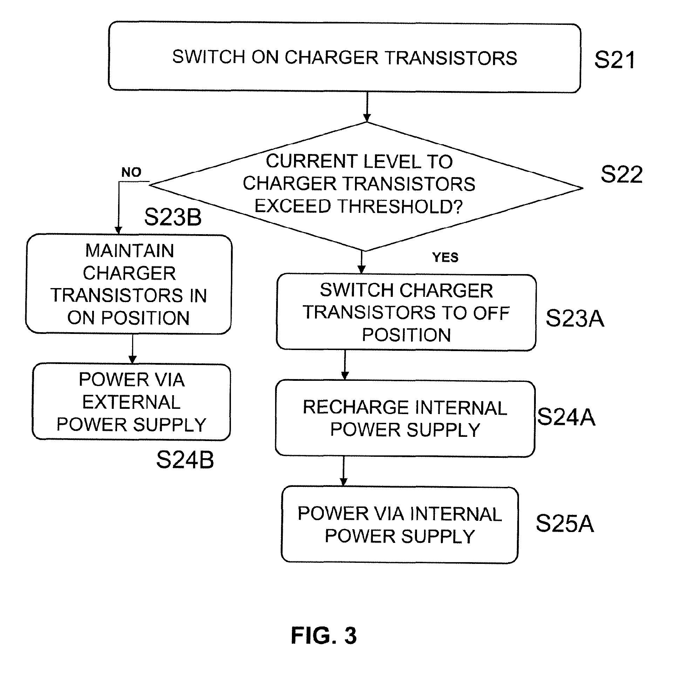

Operation of the circuitry will now be described with reference to Figures 2 and 3. In step S11 the electronic device 100 is connected to an external power supply 104 by means of USB connection 103. The electronic device 100 may be connected to the external power supply 104 for the purpose of testing it after manufacture or to for a debugging operation, for example. Detection of the connection of the electronic device 100 to the external power supply 104 enables the method of the embodiment of the invention to be implemented.

In step S12 it is determined if an operational internal power supply is present in the electronic device. It may be the case that 1) a battery is not inserted in the electronic device, alternatively 2) a battery may be present and operational, for example in a fully or partially charged state; or 3) it may be that a battery is present but is in fully discharged state. In cases 1 and 3 it is determined that an operational power supply is not present, while for case 2 it is determined that an operational internal power supply is present. In alternative embodiments of the invention a predetermined level of battery charge may be used to determine if the battery is operational or not.

Any suitable method of battery presence detection known to the skilled person may be implemented to detect the presence of an internal power supply.

If it is determined that an operational internal power supply is present the charger transistors of the charger arrangement of battery charger cell 102 are maintained in the OFF position thereby preventing a low impedance path being formed between the external power supply 104 and the battery 101. In this way current flow to the battery 101 is minimised.

In step S14A the electronic device 100 is then powered by means of the internal power supply i.e. the battery 101. The PMU cell 106 indicates connection of the external power supply to enable any modules of the device 100 to operate as if the "testing supply mode" of electronic device 100 was effectively enabled. Further actions may be carried out, for example the battery 101 may be recharged if required.

In the embodiment, if it is determined that an operational power supply is not present the charger transistors of the charger arrangement 102 can be switched to the ON position in step 13B to enable a low impedance path to be provided between the external power supply 104 and the power voltage line and power is provided to the device by the external power supply 104 through the connection 103 in step S14B.

In an further embodiment illustrated in Figure 3 in when it is determined in step S12 of the main method that an operational internal power supply is not present in step S21 the charger transistors of the battery charger cell 102 are switched on to provide a low impedance path between the external power supply 104 and the power voltage line of the electronic device 100. At this stage the system wishes to distinguish between there being no battery presence and there being a deeply or fully discharged battery present. Accordingly a current sensing module of the battery charger cell 102 is turned ON to monitor the current passing into the charger transistors.

In step S22 it is determined if the level of current passing through the charger transistors exceeds a threshold. For example, this threshold is set to around 400mA.

If there is in effect no battery present, since at this stage the electronic device 100 is not powered-up (because there was no internal or external power source before the connection to the external power supply 104 was made), the current passing through the charging path is low (<10mA typically). The controller 105 then senses this low current and determines that it does not exceed the current threshold in step S22. Accordingly it deduces that « testing supply mode » or connection to the external power supply 104 can be applied safely. In step S23B the charging power transistors are maintained in the ON state and the electronic device 100 is powered-up in step S24B using the external power supply 104 through the charger connection 103. The « testing supply mode » is fully operating.

If on the other hand a deep discharged battery is present, a low impedance path between the battery power line and the charger connection 103 by placing the charger transistors of the charger cell 102 in an ON state create a high current in this path. For example a typical battery cell voltage would be around 2.5V, while the external power supply could typically be 3.7V. The battery charging path between the external power supply 104 and the battery 101 passes through a diode and so the current reaching the battery 101 will be (3.7 - 2.5 - 0.7)/0.3 = 1.66A (0.3 being the impedance of the charging power transistors plus the current sense resistor). In step S22 the controller 105 can detect this high current and stop the « testing supply mode » by turning OFF the charging power transistors in step S23A. The PMU sequencer of PMU cell 106 will be routed to typical deep discharged battery management, i.e. it can enable recharging of the battery 101 in step S24A and awaits a number of seconds before attempting again any new detection. When the battery 101 recovers from its deep discharged state because it has been sufficiently recharged with the recharging current, it will appear as a inserted battery in an operational state and the electronic device 100 can be powered from the battery 101.

In some cases there may be a large capacitive load on the battery power line on a real PCB. In such a case, even if no battery is connected, when the charging power transistor transit to an ON state at step S22 above when the current passing through the charger transistors, a large spike current may be present while the capacitors are not fully charged. In order to avoid inaccurate determination of the current level of a time delay is implemented between steps S21 and S22, i.e. between the low impedance connection being created between the battery line and the charger connection 103 and the evaluation of charging path current.

In cases where the « testing supply mode » is enabled i.e. the electronic device is powered from the external power supply 104, the charging path current can still be monitored. In fact, at anytime a battery can be inserted into the device and because of the shorting of battery line to charger connection 103, the inserted battery can be damaged. The PMU sequencer can thus monitor the charging path current sense with a high threshold to allow the full functional mode (2A typically). If a high current value is reached, the « testing supply mode » will be deactivated. In parallel, the charging path current value is monitored and compared to a known value corresponding to the electronic device functioning mode. An excess of the sense current would mean that a battery has been inserted and as a consequent the controller will request the « testing supply mode » to be stopped allowing the electronic device to be powered by the battery.

Embodiments of the invention are thus able to reduce instances of long uncontrolled current or voltage being fed to the internal power supply of an electronic device when it is connected to an external power supply. Moreover if no battery is present the electronic device may be fully operational by being powered by an external power supply.

Embodiments of the invention may be applied when mobile electronic devices are being tested before and after manufacture or when debugging. It will be understood that methods of the invention are not limited to such applications.

The circuitry described above may be disposed in an integrated circuit (IC) such as a system on a chip, and the IC may be incorporated into a system.

The method according to the embodiments of the invention can find applications in the powering of electronic devices such as wireless mobile devices such as those comprising integrated circuits implementing EDGE, GSM or GPRS technology.

Although the present invention has been described hereinabove with reference to specific embodiments, the present invention is not limited to the specific embodiments, and modifications will be apparent to a skilled person in the art which lie within the scope of the present invention that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of powering an electronic device, the electronic device being operable to have an internal power supply and being connectable to an external power supply, the method comprising:
detecting the connection of the electronic device to the external power supply;
determining if an operational internal power supply is present in the electronic device; and upon determining that an operational internal power supply is present, the method further comprising
maintaining a high impedance electrical path between a power line of the internal power supply and the external power supply; and
powering the device by means of the internal power supply.

2. A method according to claim 1 wherein upon determining that an operational internal power supply is not present the method further comprises the steps of :
providing a low impedance electrical path between the power line of the internal power supply and the external power supply;
determining if the level of current in the electrical path between the power line of the internal power supply and the external power supply falls below a first current threshold; and if it is determined that the said level of current falls below a first current threshold;
maintaining the low impedance electrical path between the internal power supply line and the external power supply; and
powering the device by means of the external power supply.

3. A method according to claim 2 wherein upon determining that the level of current in the electrical path between the internal power supply line and the external power supply exceeds the first current threshold; the method further comprises:
providing a high impedance path between the internal power supply line and the external power supply;
enabling recharging of the internal power supply; and
powering the device by means of the internal power supply when the internal power supply is sufficiently charged.

4. A method according to any one of the preceding claims wherein a high impedance electrical path is formed by charger power transistors associated with the internal power supply being in an OFF or open state, and a low impedance electrical path is formed by charger power transistors associated with the internal power supply being in an ON or closed state.

5. A method according to any one of claims 2 to 4, wherein the first current threshold is set in the range of from 300mA to 500mA.

6. A method according to any one of claims 2 to 5, wherein a time delay is implemented between the step of providing a low impedance electrical path and the step of determining if the level of current in the electrical path between the internal power supply line and the external power supply falls below a first current threshold.

7. A method according to any one of claims 3 to 6 wherein the current level on the electrical path between the internal power supply line and the external power supply is monitored while the a low impedance electrical path is provided between the internal power supply and the external power supply, and if the current level exceeds a second threshold a high impedance electrical path is provided between the internal power supply and the external power supply.

8. A method according to any one of the preceding claims wherein the external power supply is provided via a USB connection.

9. A mobile electronic device comprising
an internal power supply line;
a connector operable to connect the electronic device to an external power supply,
a switch arrangement operable in a first state to provide a high impedance electrical path between the internal power supply line and the external power supply and in a second state to provide a low impedance electrical path between the internal power supply line and the external power supply;
a processor operable to determine if the electronic device is connected to the external power supply; and to determine if an operational internal power supply is present in the electronic device; the processor being operable to maintain the switch arrangement in the first state if it is determined that an operational internal power supply is present, such that the electronic device can be powered by the internal power supply.

10. A device according to claim 9 further comprising:
a current detector operable to determine if the level of current in the electrical path between the internal power supply line and the external power supply falls below a first threshold; and wherein
the processor is operable to place the switch arrangement in the second state if it is determined that an operational internal power supply is not present; the processor being further operable to maintain the switch arrangement in the second state if it is determined that the said level of current falls below a first current threshold such that the device may be powered by means of the external power supply.

11. A device according to claim 10 wherein the processor is further operable to place the switch arrangement in the first state if it is determined that the level of current in the electrical path between the internal power supply line and the external power supply exceeds the first current threshold; and to enable recharging of the internal power supply; so that the device may be powered by means of the internal power supply when the internal power supply is sufficiently charged.

12. A device according to claim 10 or 11, wherein the first current threshold is set in the range of from 300mA to 500mA.

13. A device according to any one of claims 10 to 12, further comprising a timer for implementing a time delay between the processor placing the switch arrangement in the second state and the current detector determining if the level of current in the electrical path between the internal power supply line and the external power supply falls below the first current threshold.

14. A device according to any one of claims 10 to 13 wherein the current detector is operable to determine if the current level on the electrical path between the internal power supply line and the external power supply exceeds a third current threshold while the switch arrangement is in the second state, and wherein the processor is operable to place the switch arrangement in the first state if the current level exceeds a third threshold.

15. A device according to any one of claims 9 to 14 wherein the connector is a USB connector.
